# EUROPÄISCHE PATENTANMELDUNG

(11) **EP 1 844 945 A1**
(43) Veröffentlichungstag der Anmeldung: **17.10.2007**
(21) Anmeldenummer: 06007801.1
(22) Anmeldetag: 13.04.2006
(51) Int. Cl.: B41M 5/52, B41M 3/14, D21H 19/66, D21H 19/38, C09D 11/00

(54) **Verfahren zur Aufbringung von Interferenzpigmenten auf ein Substrat**

(71) Anmelder: M-Real Oyj, 02100 Espoo (FI)
(72) Erfinder: Becker, Franz Josef, 51465 Bergisch Gladbach (DE); Uerlings, Viktor, 52351 Düren (DE)
(74) Vertreter: Polypatent

(57) **Zusammenfassung**

Die vorliegende Erfindung betrifft ein Verfahren zur Aufbringung von Interferenzpigmenten auf ein Substrat umfassend die Schritte:
a) Bereitstellung eines Substrats und
b) Aufbringung einer Präparation auf wenigstens einer Seite des Substrats, die Präparation enthält mindestens ein Tensid und mindestens ein Interferenzpigment, wobei das Interferenzpigment ein Trägermaterial und mindestens eine auf dem Trägermaterial aufgebrachte Beschichtung aufweist,
sowie ein Substrat, erhältlich nach dem vorgenannten Verfahren.

## Beschreibung

Die vorliegende Erfindung betrifft ein Verfahren zur Aufbringung von Interferenzpigmenten auf ein Substrat sowie ein Substrat, erhältlich nach dem vorgenannten Verfahren.

Auch im Zeitalter der elektronischen Datenübertragung besteht ein allgemeiner Bedarf für visuell ansprechende Papiere. Deshalb ist es ein Ziel der papierherstellenden Industrie, Papiere mit ansprechenden optischen Eigenschaften herzustellen, die auch eine hohe Papierqualität aufweisen. Andererseits besteht auch ein weiterer Bedarf, Substrate und insbesondere Papiere durch Sicherheitsmerkmale vor Fälschungen zu schützen. Eine Möglichkeit, solche Sicherheitsmerkmale aufzubringen, besteht darin, spezielle Druckfarben mit so genannten Sicherheitspigmenten auf das zu schützende Substrat aufzubringen. Nachteilig hierbei ist jedoch, dass die notwendige Auftragsmenge sehr hoch ist, so dass solche Sicherheitsmerkmale mit erheblichen Kosten verbunden sind.

In der US-A-4,534,157 wird ein Papier nachdem es als Papierbahn hergestellt wurde im feuchten Zustand farbig bedruckt, wobei Tinte mittels Tintendüsen auf eine Farbübertragungswalze aufgebracht wird, die dann die Tinte auf das Papier überträgt. Deshalb wird ein unregelmäßiges, diffuses Muster mit einer Tintenmenge, die über die gesamte Papierbahn konstant bleibt, aufgetragen, wobei das Papier ansonsten nicht gefärbt ist.

In der EP-A-601 517 wird ein weißes Papier mit sowenig Tinte wie möglich in regulären und unregelmäßigen Mustern bedruckt. Die Tinte penetriert nur zu einem geringen Anteil in das Papier. Die Offenbarung der EP-A-601 157 hat insbesondere ihre Anwendung aufgrund der geringen Penetration der Tinte in das Papier, da das Papier nachfolgend wie ein weißes Papier wiederaufbereitet werden kann. Die Tinte sollte deshalb leicht von dem Papier entfernt werden können.

EP-A-681 060 offenbart ein Verfahren zur Herstellung von unterschiedlich gefärbtem Papier, wobei Zellulosefasern und Agglomerate unterschiedlicher Dicke in dem Verfahren zur Papierherstellung verwendet werden und auf dem fertigen Papier aufgebracht oder dort eingearbeitet sind. Die Zellulosefasern oder Agglomerate mit unterschiedlicher Dicke werden vor der Aufbringung oder Einarbeitung in das Papier gefärbt und werden dann in die Papierpulpe eingebracht, die selbst eine andere Farbe aufweisen kann.

Die Verfahren, die zur Zeit zur Herstellung von gemusterten Papieren verwendet werden sind entweder aufwändig oder das Produktionsverfahren ist langsam oder sie führen zu Papieren mit einem vollkommen unterschiedlichen Effekt.

EP-A-439 363 offenbart ein Papier, welches entleimende Mittel enthält oder damit beschichtet ist, wobei als Resultat eine bessere Absorption der Tinte während des Druckprozesses durch ein Ink-Jet-Druckverfahren erreicht wird. Das Entleimungsmittel wird in oder ist auf diesem Papier einheitlich auf der gesamten Papieroberfläche verteilt, um eine optimal gedruckte Kopie zu erhalten.

EP-A-518 490 offenbart eine Tinte für den Ink-Jet-Druck, wobei die Tinte eine Zusammensetzung enthält, die die Penetration von Tinte in das bedruckte Papier erleichtert.

Den Lehren der EP-A-439 363 und EP-A-518 490 ist gemein, dass die Penetration polarer Flüssigkeiten, wie z.B. Ink-Jet-Tinten, in die Papierstruktur und in die Papierfasern des geleimten Papiers durch die Verwendung von geeigneten Entleimungsmitteln erleichtert wird. Jedoch offenbaren weder EP-A-439 363 noch EP-A-518 490 die Herstellung eines gemusterten Papiers mittels nicht-einheitlicher Färbung der Papieroberfläche unter Verwendung von Interferenzpigmenten.

Zur Verbesserung der Druck- und Beschriftungseigenschaften eines Basispapiers schlägt die EP-A-1 239 077 vor, ein nichtionisches Tensid mit einer Polyalkoxylenstruktur aufzubringen.

EP-A-732 219 offenbart einen Druckstoff, enthaltend ein flüssigkeitsabsorbierendes Basismaterial, eine Tintenakzeptorschicht, die auf dem Basismaterial aufgebracht ist, welche ein Pigment, ein Bindemittel und eine kationische Substanz enthält und eine Oberflächenschicht, welche auf der Tintenaufnahmeschicht aufgebracht ist, welche sich aus kationischen ultrafeinen Partikeln als anorganische Partikel zusammensetzt. Ultrafeine partikuläre Oxide von Metallen mit einem Durchmesser im Bereich von 1 bis 500 nm werden hierfür beschrieben. Diese Partikel bilden eine geschlossene, glänzende Oberflächenschicht. Die Pigmente, die in der Tintenaufnahmeschicht enthalten sind, sind anorganische Pigmente mit einem Durchmesser im Bereich von 0,1 bis 20 µm.

Eine weitere Möglichkeit, nicht einheitlich gefärbte Papiere herzustellen, wird in den Offenlegungsschriften EP-A 1 439 263 sowie EP-A 1 281 812 offenbart. Beiden Schriften ist gemein, dass ein latentes Bild oder Muster unter Zuhilfenahme eines Tensids oder Tensidgemischs auf ein Papiersubstrat erzeugt wird, wobei das so behandelte Papier nachfolgend gefärbt wird. In der EP 1 439 263 sind in der tensidhaltigen Zubereitung, mit welcher das latente Bild oder Muster erzeugt wird, Pigmente enthalten. In dieser Druckschrift wird jedoch nicht offenbart, dass Interferenzpigmente, die aus einem Trägermaterial und einer hierauf aufgebrachten Beschichtung bestehen, in der Zubereitung enthalten sind.

Es ist ein Ziel der vorliegenden Erfindung, ein optisch ansprechendes Substrat bereitzustellen, bei dem Interferenzpigmente aufgebracht sind. Da die Modifikation einer Oberfläche mit Interferenzpigmenten sehr kostenintensiv ist, soll die Menge an Interferenzpigment, die verwendet wird, möglichst gering sein.

Ein weiteres Ziel der vorliegenden Erfindung ist die Bereitstellung von behandelten Substraten, die Sicherheitsmerkmale aufweisen, wobei die Sicherheitsmerkmale nur sehr schwer oder gar nicht zu fälschen sind. Es soll somit ein Substrat als Sicherheitselement bereitgestellt werden, bei dem die Einbringung von Sicherheitsmerkmalen in einer Form erfolgt, die es einem potenziellen Fälscher unmöglich macht, diese nachzuahmen.

Das Ziel der vorliegenden Erfindung wird gelöst durch ein Verfahren zur Aufbringung von Interferenzpigmenten auf ein Substrat umfassend die Schritte:
a) Bereitstellung eines Substrats und
b) Aufbringung einer Präparation auf wenigstens einer Seite des Substrats, die Präparation enthält mindestens ein Tensid und mindestens ein Interferenzpigment, wobei das Interferenzpigment ein Trägermaterial und mindestens eine auf dem Trägermaterial aufgebrachte Beschichtung aufweist.

Im Sinne dieser Erfindung ist unter Aufbringung der Präparation auf das Substrat eine Imprägnierung und/oder eine Beschichtung zu verstehen. Das Substrat wird durch die Aufbringung der Präparation beschichtet und/oder imprägniert.

In einer bevorzugten Ausführungsform ist das Substrat in Schritt a) ein Papier und/oder Karton.

Eine Oberflächenleimung des Substrats kann anstelle oder zusätzlich zu einer Masseleimung des Substrats durchgeführt werden. Hier werden filmbildende Substanzen, wie z.B. Lösungen oder Dispersionen von modifizierten Stärken, Harzen oder modifizierten Polymeren, z.B. unter Zuhilfenahme einer Leimpresse innerhalb einer Papiermaschine, auf die bereits geformte Papierbahn aufgebracht. Die Oberflächenleimung trägt außerdem zur Festigkeit des Papiers bei, so dass qualitativ hochwertige Druckpapiere oft eine Masseleimung und Oberflächenleimung aufweisen. Das Vorhandensein einer Oberflächenleimung ist jedoch nicht essentiell für das Verfahren der vorliegenden Erfindung und außerdem ist es möglich ein Substrat zu verwenden, welches keine Oberflächenleimung und/oder Masseleimung aufweist.

Alternativ kann das Verfahren zur Herstellung von nicht-einheitlich intensiv gefärbtem Substrat in Schritt a) die Aufbringung einer Farbstofflösung in Form eines sichtbaren Bildes oder Musters auf das Substrat enthalten.

Bevorzugte Ausführungsformen der Erfindung sind in den Unteransprüchen angegeben.

Vorzugsweise wird die Präparation in Schritt b) in Form eines latenten Bildes oder Musters aufgebracht.

Das Bild oder Muster kann in Form eines repräsentativen Bildes oder einer imaginären Struktur, eines Symbols, eines gleichmäßigen oder ungleichmäßigen Musters, einer Netzstruktur oder einer ungleichmäßigen, z.B. zufälligen Verteilung von Farbe auf dem Substrat vorliegen.

Das Bild oder Muster kann entweder sofort nach der Papierherstellung, also im noch feuchten Papier oder auf einem nachfolgend hergestellten getrockneten Papier aufgebracht werden, wobei das Papier dann vollflächig mittels einer wässrigen Farbstofflösung gefärbt wird. Das Bild oder Muster kann auf eine kontinuierliche Papierbahn oder auf einzelne Papierbögen aufgebracht werden. Vorzugsweise wird das Bild oder Muster auf eine kontinuierliche Papierbahn aufgebracht.

Das Bild oder Muster kann durch jedes gewünschte Verfahren aufgebracht werden, insbesondere durch Ink-Jet-Druck, Offset-Druck, Flexodruck, Tiefdruck, Druck mit Filz- oder Gummiwalzen, durch Aufsprühen oder manuell, wobei das letzte Verfahren nicht für eine industrielle Produktion geeignet ist. Besonders bevorzugte Auftragungsmethode für das Bild oder Muster ist die Auftragung mittels eines Ink-Jet-Drucks, Flexodrucks oder Tiefdrucks.

Das Muster oder Bild wird entweder in der Form eines latenten Bildes oder Musters aufgebracht oder in Form eines auf dem Papier sichtbaren Bildes oder Musters.

Das Trägermaterial des Interferenzpigments in Schritt b) weist vorzugsweise eine plättchenförmige Struktur auf und/oder ist vorzugsweise ein anorganisches Trägermaterial.

Der Konzentrationsbereich des mindestens einen Interferenzpigments in der Präparation, das aufgebracht wird, ist 0,01 bis 30 Gewichtsprozent, vorzugsweise 0,1 bis 25 Gewichtsprozent, weiter bevorzugt im Bereich von 0,2 bis 15 Gewichtsprozent.

Weiter bevorzugt ist das Trägermaterial des Interferenzpigments in Schritt b) natürlicher oder synthetischer Glimmer, Talkum, Kaolin, Glasplättchen, SiO₂-Plättchen, TiO₂-Plättchen, Al₂O₃-Plättchen, Fe₂O₃-Plättchen, Graphitplättchen oder Mischungen derselben.

Vorzugsweise werden auf dem Trägermaterial des Interferenzpigments in Schritt b) zwei, drei, vier, fünf, sechs, sieben oder acht Beschichtungen aufgebracht, welche vorzugsweise jeweils gleich oder unterschiedlich sein können. Es ist weiter bevorzugt, dass der Brechungsindex der jeweiligen Beschichtung unterschiedlich von der vorhergehend aufgebrachten Beschichtung ist. In einer bevorzugten Ausführungsform ist die Differenz der Brechungsindizes von zwei benachbarten Schichten jeweils größer als 0,1.

Vorzugsweise enthalten die Beschichtung/Beschichtungen des Interferenzpigments in Schritt b) unabhängig voneinander Oxide von Metallen oder Semimetallen/Halbmetallen oder Mischungen derselben, wie zum Beispiel Silicium, Zinn, Titan, Eisen. Es ist weiter bevorzugt, dass die Beschichtung/die Beschichtungen des Interferenzpigments in Schritt b) Oxide, ausgewählt aus TiO₂, Titansuboxid, Titanoxinitrid, Fe₂O₃, Fe₃O₄, SnO₂, Sb₂O₃, SiO₂, Al₂O₃, ZrO₂, B₂O₃, Cr₂O₃, ZnO, CuO, NiO oder Mischungen derselben, enthält/enthalten.

Alternativ ist es möglich, dass anstelle der Oxidbeschichtungen auch eine semitransparente Schicht eines Metalls verwendet werden kann, wobei geeignete Metalle vorzugsweise ausgewählt sind aus Chrom, Titan, Molybdän, Wolfram, Aluminium, Kupfer, Silber, Gold, Nickel oder Mischungen derselben.

Es ist auch möglich, dass in die jeweilige Beschichtung auch weiterhin feinteilige Partikel im Nanometergrößenbereich eingebracht werden, wobei es sich als vorteilhaft erwiesen hat, beispielsweise feinteiliges Titandioxid oder feinteiligen Kohlenstoff (Ruß), mit Teilchengrößen im Bereich von 10 bis 250 nm einzubringen. Durch die lichtstreuenden Eigenschaften derartiger Partikel kann weiterhin noch gezielter auf Glanz und Deckvermögen Einfluss genommen werden.

Besonders bevorzugte Trägermaterialien sind Glasplättchen, welche mit Titandioxid und/oder Fe₂O₃ beschichtet sind, oder aber Glasplättchen, die zunächst eine SiO₂-Schicht aufweisen und anschließend mit TiO₂ und/oder Fe₂O₃ beschichtet sind.

Als Interferenzpigmente sind ebenfalls Mehrschichtpigmente besonders bevorzugt, welche insbesondere auf Basis von Glimmer und/oder Titandioxid aufgebaut sind. Diese weisen vorzugsweise in der Regel alternierend hoch- und niedrigbrechende Schichten auf, welche vorzugsweise die oben angegebenen Metalloxide enthalten. Weiter bevorzugte Mehrschichtpigmente enthalten bis zu sieben Schichten, vorzugsweise drei, fünf oder sieben Schichten.

Die Interferenzpigmente haben vorzugsweise eine Dicke zwischen 0,3 und 5 µm und insbesondere zwischen 0,4 und 2,0 µm. Die Ausdehnung in den beiden anderen Dimensionen beträgt üblicherweise zwischen 1 und 250 µm, vorzugsweise zwischen 2 und 100 µm und insbesondere zwischen 5 und 60 µm.

Als Trägermaterial des Interferenzpigments sind außerdem noch weitere Substanzen bevorzugt, wie zum Beispiel plättchenförmiges Eisen oder Aluminiumoxid, Graphitplättchen, BiOCI, plättchenförmige holografische Pigmente oder "Liquid crystal"-Polymere (LCPs). Die aufgebrachte(n) Beschichtung(en) können außerdem Metalloxide, Metalloxidhydrat, MgF₂ oder BiOCI enthalten.

Falls mehrere Beschichtungen auf dem Trägermaterial aufgebracht sind, ist es bevorzugt, dass das Schichtpaket eine Schicht aus nichtabsorbierendem Material mit einer Brechzahl von n ≤ 1,8 und eine Schicht aus nichtabsorbierendem Material mit einer Brechzahl von n ≥ 1,8 enthält. Es ist bevorzugt, dass das nichtabsorbierende Material mit einer Brechzahl von n ≤ 1,8 SiO₂, SiO(OH)₂, Al₂O₃, AIO(OH), P₂O₃, MgF₂ oder Mischungen derselben enthält. Es ist weiter bevorzugt, dass das nichtabsorbierende Material mit einer Brechzahl von n ≥ 1,8 TiO₂, ZrO₂, ZnO, SnO₂, BiOCl oder Mischungen derselben enthält. Weiter bevorzugt kann eine weitere Beschichtung aufgebracht sein, die FeTiO₃-haltig ist.

Die Beschichtung(en), die auf dem Trägermaterial aufgebracht sind, können außerdem Al₂O₃, Ce₂O₃, P₂O₃, ZrO₂, SnO₂ oder Mischungen derselben enthalten. Die vorgenannten Interferenzpigmente können zum Beispiel gemäß den Vorschriften der DE-A-102004032121, DE-A-10320455, DE-A-10061178, DE-A-19746067, DE-A-102004039554, DE-A-10051062 oder DE-A-19817286 hergestellt werden.

Es ist bevorzugt, dass das Tensid in Schritt b) die Penetration von wasserlöslichen Farbstoffen in das Substrat verringert. Außerdem ist es bevorzugt, dass das Tensid in Schritt b) die Penetration von wasserlöslichen Farbstoffen in das Substrat erleichtert. Alternativ ist es auch möglich, dass in Schritt b) sowohl ein Tensid, welches die Penetration von wasserlöslichen Farbstoffen in das Papier erleichtert, und ein Tensid, welches die Penetration von wasserlöslichen Farbstoffen in das Papier verringert, aufgebracht wird.

Zur Bildung eines latenten Bildes oder Musters wird eine Substanz auf das Papier aufgebracht, die die Penetration von wässrigen Farbstofflösungen in das Papier beeinflusst, wobei eine Substanz aufgebracht wird, um entweder die Absorption zu fördern oder zu reduzieren.

Dies kann durch Reduzierung (Entleimungsmittel) oder Steigerung (Hydrophobierungsmittel) mittels der aufgebrachten Substanz erreicht werden, wobei der Grad an Leimung oder der Grad an Hydrophobierung durch die Papierleimung erzielt wird.

Jede Substanz, die diese Eigenschaften aufweist, kann für das Verfahren der vorliegenden Erfindung verwendet werden. Tenside werden vorzugsweise für diesen Zweck verwendet. Anionische, kationische, nichtionische oder amphotere Tenside können verwendet werden. Zusätzlich zu den Tensiden ist es möglich, weitere Substanzen, die die Penetration von Farbstoffen in das Papier erleichtern, zu verwenden. Solche Substanzen sind z.B. Glykolether, wie z.B. Ethylenglykolmonomethylether, Ethylenglykolmonoethylether, Ethylenglykolmonophenylether, Diethylenglykolmonomethylether, Diethylenglykolmonoethylether und Diethylenglykolmonobutylether.

Geeignete entleimende Tenside können z.B. ausgewählt werden aus (1) hydrophilen Polydialkylsiloxanen, (2) Polyalkylenglykol, (3) Propylenoxid/Polyethylenoxid-Copolymeren, (4) fettsäuremodifizierten Verbindungen von Phosphaten, Sorbitan, Glycerin, Polyethylenglykol, Sulfosuccinsäuren, Sulfonsäuren oder Alkylaminen, (5) polyoxyalkylenmodifizierten Verbindungen von Sorbitanestern, Fettsäureaminen, Alkanolamiden, Rizinusöl, Fettsäuren, Fettalkoholen, (6) quarternäre Alkoholsulfatverbindungen, (7) Fettsäureimidazolinen, (8) polyethermodifizierte Trisiloxane und (9) Mischungen derselben.

Spezifische Beispiele von wasser- oder alkohollöslichen Entleimungsmitteln der oben aufgeführten Klassen von Substanzen sind z.B. (1) Poly(oxyalkylen)modifikationen von (a) Sorbitanestern (z.B. Alkamuls PSML-4 (Poly(oxyethylen)sorbitamonolaurat), Alkamuls PSMO-20 (Poly(oxyethylen)sorbitanmonooleat), Alkamuls PSTO-20 (Poly(oxyethylen)sorbitantrioleat), Alkaril Chemicals); (b) Fettamine (z.B. Alkaminox T-2, T-6 (Talgaminoxyethylat), Alkaminox SO-5 (Sojabohnenaminoxyethylat), Alkaril Chemicals), (Icomeen T-2, Icomeen T-15, ICI Chemicals); (c) Castoröl (z.B. Alkasurf CO-10, Alkasurf CO-25B (Castoröloxyethylat), Alkaril Chemicals); (d) Alkanolamide (z.B. Alkamid C-2, C-5 (Kokosnussölalkanolamidoxyethylat), Alkaril Chemicals); (e) Fettsäuren (z.B. Alkasurf 075-9, Alkasurf 0-10, Alkasurf 0-14 (Ölsäureoxyethylat), Alkasurf L-14 (Laurinsäureoxyethylat), Alkasurf P-7 (Palminsäureoxyethylat), Alkaril Chemicals); (f) Fettsäurealkohol (z.B. Alkasurf LAN-1, LAN-3, Alkasurf TDA-6, Alkasurf SA-2 (lineares Alkoholoxyethylat), Alkasurf NP-1, NP-11, Rexol 130 (Nonylphenoloxyethylat), Alkasurf OP-1, OP-12 (Octylphenoloxyethylat), Alkasurf LA-EP-15, Alkasurf LA-EP-25, Alkasurf LA-EP-65 (lineares Alkoholoxyalkylat)); (2) hydrophile Poly(dimethylsiloxane), wie etwa zum Beispiel, (a) Poly(dimethylsiloxan) mit einer Monocarbinol Endgruppe (PS556, Petrarch Systems Inc.) und Poly(dimethylsiloxan) mit einer Dicarbinol Endgruppe (PS555, PS556, Petrarch Systems Inc.); (b) Poly(dimethylsiloxan)-b-Poly(methylsiloxan/alkylenoxid)-Copolymere (PS 073, PS 072, PS 071, Petrarch Systems Inc.), Alkasil HEP 182-280, Alkasil HEP 148-330 (Alkaril Chemicals), nichthydrolysierbare Copolymere enthaltend Si-C-Bindungen; (c) Poly(dimethylsiloxan)-b-Poly(propylenoxid)-b-Poly(ethylenoxid)-Copolymere (Alkasil NEP 73-70, Akaril Chemicals), ein hydrolysierbares Copolymer, enthaltend Si-O-C-Bindungen; (d) polyquaternisierte Poly(dimethylsiloxan)-Copolymere (die aus einer Additionsreaktion von einem α,ω-Wasserstoffpolysiloxan mit Epoxiden enthaltend olefinische Bindungen und nachfolgender Reaktion mit einem Diamine erhalten werden können); (3) Fettimidazoline und ihre Derivate, wie, zum Beispiel, (a) Alkazin-0(oleylderivate); (b) Alkazin TO (Tallölderivat); (c) Alkatric 2C1B (Dicarboxylsäurekokosnussimidazolinnatriumsalz), Alkaril Chemicals; (d) Arzoline-4; (e) Arzoline-215, Baker Chemicals; (4) Fettsäureester von (a) Phosphaten (z.B. Alkaphos B6-56A, Alkaril Chemicals); (b) Sorbitan (z.B. Alkamuls STO (Sorbitantrioleat), Alkamuls SML (Sorbitanmonolaurat), Alkamuls SMO (Sorbitanmonooleät), Alkaril Chemicals); (c) Glycerylverbindungen (z.B. Alkamuls GMO-45LG (Glycerylmonooleat), Alkamuls GDO (Glyceryldioleat), Alkamuls GTO (Glyceroltrioleat); (d) Poly(ethylenglykole) (Alkamuls 600 DO (Dioleat), Alkamuls 400-ML (Monolaurat), Alkamuls 600 MO (Monooleat), Alkamuls 600 DL (Dilaurat), Alkamuls 600 DT (Ditalg), Alkaril Chemicals); (e) Sulfosuccinsäure (z.B. Alkasurf SS-O-75 (Natriumdioctylsulfosuccinat), Alkasurf SS-DA4-HE (Oxyethylatalkoholsulfosuccinat), Alkasurf SS-L7DE (Natriumsulfosuccinatester von Laurinsäurediethanolamid), Alkasurf SS-L-HE (Natriumlaurylsulfosuccinat), Alkaril Chemicals); (f) Sulfonsäure (z.B. Alkasurf CA (Calciumdodecylbenzolsulfonat), Alkasurf IPAM (Isopropylamindodecylbenzolsulfonat), Alkaril Chemicals); (g) Alkylamine (z.B. Alkamid SDO (Sojabohnendiethanolamid), Alkamid CDE (Kokos-diethanolamid), Alkamid 2104 (Kokosnussfettsäurediethanolamid), Alkamid CMA (Kokosmonoethanolamid), Alkamid L9DE (Lauryldiethanolamid), Alkamid L7Me (Laurylmonoethanolamid), Alkamid L1 PA (Laurylmonoisopropylamid), Alkaril Chemicals); (5) quaternäre Verbindungen, wie etwa zum Beispiel, (a) nichtpolymeres quaternisiertes Ammoniumthosulfat (z.B. Finquat CT, Cordex T-172, Finetex Corporation); (b) quaternäres Dialkyldimethylmethosulfat (z.B. Alkaquat DHTS (hydrierter Talg)); (c) alkoxyliertes quaternisiertes Di-Fettmethosulfat (z.B. Alkasurf DAET (Talgderivat)); (d) quaternisiertes Fettimidazolinmethosulfat (z.B. Alkaquat T (Talgderivative), Alkaril Chemicals); (6) wasserlösliche Copolymere von lipophilen Poly(propylenoxid) mit hydrophilem Poly(ethylenoxid), wie etwa zum Beispiel, (a) methanollösliches Tetronic 150R1, Pluronic L-101, Tetronic 902, Tetronic 25R2 (BASF Corporation), Alkatronic EGE-1 (Alkaril Chemicals); (b) wasserlösliches Tetronic 908, 50R8, 25R8, 904, 90R4, Pluronic F-77, alle von BASF Corporation und Alkatronic EGE 25-2 und PGP 33-8 von Alkaril Chemicals; (7) Poly(alkylenglycol) und seine Derivate, wie etwa zum Beispiel, (a) Polypropylenglykol (Alkapol PPG 425, Alkapol PPG-4000, Alkaril Chemicals); (b) Poly(propylenglykoldimethacrylat), Poly(ethylenglykoldiacrylat), Poly(ethylenglykoldimethacrylat), Poly(ethylenglykolmonomethylether), Poly(ethylenglykoldimethylether), Poly(ethylenglykoldiglycidylether) (alle von Polysciences); (c) Poly(1,4-oxybutylenglykol) (Scientific Polymer Products) und ähnliche.

Bevorzugte Entleimungsmittel umfassen lineare Alkoholoxyethylate (z.B. Alkasurf LA-EP-65, LA-EP-25 und LA-EP-15 erhältlich von Alkaril Chemicals), Nonylphenoloxyethylate (z.B. Alkasurf NP-11 erhältlich von Alkaril Chemicals und Rexol 130 erhältlich von Hart Chemicals), Octylphenoloxyethylate (z.B. Alkasurf OP-12 erhältlich von Alkaril Chemicals), Ölsäureoxyethylate (z.B. Alkasurf 0-14 erhältlich von Alkaril Chemicals), Poly(dimethylsiloxan)-b-Poly(propylenoxid)-b-Poly(ethylen oxid)-Copolymere (z.B. Alkasil NEP 73-70 erhältlich von Alkaril Chemicals), Castoröloxyethylate (z.B. Alkasurf CO25B erhältlich von Alkaril Chemicals), kokos-imidazolindicarboxylische Säurenatriumsalze (z.B. Alkatric 2C1B erhältlich von Alkaril Chemicals) und Kokosnussfettsäurediethanolamide (z.B. Alkamid S104 erhältlich von Alkaril Chemicals). Die Alkasurf-Entleimungsmittel sind vorzugsweise biologisch abbaubar.

Geeignete Tenside mit hydrophobierenden Eigenschaften sind z.B. Leimungsmittel, wie z.B. Alkylsuccinsäureanhydrid (ASA), Alkylketendimer (AKD) und Polyolefine (z.B. SÜDRANOL 200, Süddeutsche Emulsions-Chemie GmbH, Mannheim, Deutschland) Wachse, wachsähnliche Substanzen, Metallseifen (Stearate), Paraffin und Paraffin-Emulsionen, Fettsäuren, Fettsäure(methyl)ester, Fettalkohole, Fettalkoholpolyglykolether und Sulfate derselben.

Während der Aufbringung auf das Papier können die Tenside in Form von Lösungen, Emulsionen oder Dispersionen zugegen sein, welche des weiteren lösliche Farbstoffe, wie weiter unten angegeben und/oder weitere Hilfsstoffe zusätzlich zu den Tensiden enthalten können. Konventionelle Hilfsstoffe sind Verdicker, wie z.B. Gummi Arabicum, Polyacrylate, Polymethacrylate, Polyvinylalkohole, Hydroxypropylzellulose, Hydroxyethylzellulose, Polyvinylpyrrolidon, Polyvinylether, Stärke, Polysacharide und ähnliche, optische Aufheller, Aufhellungsquencher, Pigmente (färbende oder nichtfärbende Pigmente, einschließlich Pigmente mit einem metallischen Effekt oder Metalle), Bindemittel, Konservierungsmittel und Sicherheitschemikalien wie etwa z.B. fluoreszierende, phosphoreszierende oder lumineszierende Verbindungen. Die Tenside sind vorzugsweise wässrige oder alkoholische Lösungen.

Vorzugsweise enthält die Präparation in Schritt b) kein Bindemittel.

Der Konzentrationsbereich der Tenside in den Lösungen, Emulsionen oder Dispersionen, die aufgebracht werden, ist 0,01 bis 30 Gewichtsprozent, vorzugsweise 0,1 bis 25 Gewichtsprozent, weiter bevorzugt im Bereich von 0,2 bis 15 Gewichtsprozent.

Das Verhältnis von Interferenzpigment zu Tensid in der aufgebrachten Lösung, Emulsion oder Dispersion ist 1:0,08 bis 1:0,9, vorzugsweise 1:0,09 bis 1:0,5, weiter bevorzugt 1:0,1 bis 1:0,4, bezogen auf den Gehalt der festen Anteile (trocken).

In einer weiter bevorzugten Ausführungsform ist in der Präparation in Schritt b) wenigstens ein weiteres Pigment (Füllstoff) enthalten.

Vorzugsweise ist das weitere Pigment in Schritt b) ausgewählt aus Oxiden von Metallen oder Semimetallen/Halbmetallen, wie zum Beispiel Magnesium, Calcium, Aluminium, Zink, Chrom, Eisen, Kupfer, Zinn, Blei oder Mangan oder Diatomit oder organischen Materialen oder Kombinationen hiervon.

Vorzugsweise wird das weitere Pigment ausgewählt aus Kieselsäure, Gibbsit, Bayerit, Nordostrandit, Böhmit, Pseudoböhmit, Diaspor, Aluminiumoxid, insbesondere Korund, Aluminiumoxidhydrat, Magnesiumsilikat, basisches Magnesiumcarbonat, Titan(di)oxid, Zinkoxid, Aluminiumsilikat, Calciumcarbonat, Talkum, Kaolin, Hydrotalcit, Diatomit, organischen Materialen wie z. B. harzhaltige Pigmente hergestellt aus Harnstoff-Formaldehyd-Harzen, Ethylenharze, Styrolharze, Acrylatharze oder Kombinationen hiervon.

Das weitere Pigment, enthaltend in der Präparation in Schritt b), weist vorzugsweise eine große Oberfläche auf. Die Partikel selber aber haben vorzugsweise, wie auch immer, einen Durchmesser im Bereich von 1 bis 500 nm, vorzugsweise von 10 bis 100 nm.

Die Zugabe von Füllstoff zu der Lösung, Emulsion oder Dispersion, mit der das latente Bild oder Muster erzeugt wird, hat den Effekt, dass die Druck- und Beschriftungseigenschaften auf dem Bereich des Papiers, das mit dem Tensid behandelt wurde, verbessert wird. Durch die Behandlung des Papiers mit einem Tensid wird eine nachfolgend aufgebrachte Tinte in dem Bereich, der behandelt wird (Ausbluten (bleeding), Auslaufen (feathering)) dispergiert. Dieser Effekt wird durch das gleichzeitige Aufbringen des Tensids und eines Füllstoffs verringert, da so weniger Tensid notwendig ist, um ein vergleichbares Bild oder Muster zu erhalten, wenn gleichzeitig der Füllstoff aufgebracht wird. Aufgrund des geringeren Anteils an Tensid(en) wird eine geringere Dispergierung der Druck- oder Beschriftungstinte beobachtet. Das Verhältnis von Füllstoff zu Tensid in der aufgebrachten Lösung, Emulsion oder Dispersion ist 1:0,08 bis 1:0,9, vorzugsweise 1:0,09 bis 1:0,5, weiter bevorzugt 1:0,1 bis 1:0,4, bezogen auf den Gehalt der festen Anteile (trocken).

Die aufgebrachten weiteren Füllstoffe (weiteren Pigmente) sind vorzugsweise nicht gefärbt, weiter bevorzugt transparent und weisen einen Durchmesser auf, der so gering ist, dass keine Reflexion oder Lichtdispersion erzielt wird. Der bevorzugte mittlere Durchmesser der Partikel ist weniger als 0,1 µm. Deshalb bilden die Pigmente eine kolloidale Lösung in dem wässrigen System.

Insbesondere bevorzugt sind kationische Füllstoffe, was bedeutet, dass die Pigmente eine positive Ladung auf ihrer Oberfläche tragen. Diejenigen, die eine negative Ladung auf ihrer Oberfläche tragen, wie z.B. Silica, können auch verwendet werden, wenn die Oberfläche so behandelt wird, dass die negative Ladung auf der Oberfläche in eine positive geändert wird. Die positive Ladung auf der kationischen Oberfläche bedingt eine verbesserte Bindung der negativ geladenen Farbstoffe des nachfolgenden Färbebades. In dieser bevorzugten Ausführungsform werden nichtionische Tenside gemischt mit kationischen Füllstoffen verwendet.

Die Konzentration von Verdickungsmitteln, die als Tensidhilfsstoffe verwendet werden können, liegt im Bereich von 0 bis 5 Gewichtsprozent, vorzugsweise 0,01 bis 2,5 Gewichtsprozent, besonders bevorzugt 0,05 bis 2,5 Gewichtsprozent, bezogen auf die Gesamtlösung, -emulsion oder -dispersion.

Es ist weiter bevorzugt, dass als Verdickungsmittel in der Präparation in Schritt b) auch synthetische Schichtsilicate auf Kolloidbasis verwendet werden können. Diese Schichtsilikat sind vorzugsweise plättchenförmig und die Fläche des Schichtsilikats weist vorzugsweise eine andere Ladung auf, als die Kante des Schichtsilikats. Vorzugsweise sind diese Verdicker gelbildende Verdicker oder solbildende Verdicker. Diese Verdicker führen vorzugsweise zu einer thixotropen Präparation, welche sich vorteilhaft auf das Substrat aufbringen lässt. Exemplarisch für diese Klasse der Verdicker sind Schichtsilicate zu nennen, welche unter dem Handelsnamen "Laponite" vertrieben werden.

Um weitere Spezialeffekte auf dem veredelten Substrat zu erreichen, können entleimende Tenside und Tenside mit hydrophobierenden Eigenschaften auch auf derselben Seite derselben Papieroberfläche aufgebracht werden.

Jede gewünschte Farbstofflösung kann zur Bildung des sichtbaren Bildes oder Musters verwendet werden. Eine wässrige Lösung von substantiven, basischen oder sauren Farbstoffen, oder eine Mischung dieser Farbstoffe wird vorzugsweise verwendet. Beispiele von geeigneten Farbstofflösungen sind gebräuchliche Drucktinten, die z.B. Anthrachinon-, Monoazo-, Diazo-, Phthalocyanin-, Aza-(18)-annulen- und Formazin-Kupfer-Komplexfarbstoffe enthalten. Beispiele von geeigneten Farbstoffen sind auch die, die weiter unten für die Farbstofflösung des Tauchbades angegebenen, einschließlich Farbstoffe enthaltend oder basierend auf den Pigmenten, die weiter unten angegeben werden.

Die Konzentrationsbereiche der Farbstoffe sind 0,1 bis 30 Gewichtsprozent, weiter bevorzugt 1,0 bis 20 Gewichtsprozent, insbesondere bevorzugt 2,0 bis 10 Gewichtsprozent.

Das latente oder sichtbare Bild oder Muster kann auf einer Seite oder auf beiden Seiten des Substrats aufgebracht werden, so dass das fertige Substrat auf wenigstens einer Seite eine Färbung aufweist, die mehr oder weniger intensiv als in den nichtbehandelten Regionen der Substratoberfläche(n) ist.

In einer weiter bevorzugten Ausführungsform wird nach Aufbringen der Präparation in Schritt b) das Substrat in einem weiteren Schritt c) gefärbt und/oder bedruckt. Für das Färben/Bedrucken kann in Schritt c) vorzugsweise eine wässrige Farbstofflösung verwendet werden.

Die optionale Bedruckung in Schritt c) kann unter Zuhilfenahme von geeigneten Druckmethoden, wie z.B. dem Ink-Jet-Druck, Offset-Druck, Flexodruck, Tiefdruck oder durch Aufdrucken unter Zuhilfenahme von Filz- oder Kunststoffwalzen erfolgen. Hierbei können Druckfarben und insbesondere Offsetdruckfarben verwendet werden, die Pigmente und Drucköle enthalten. Es ist auch möglich, dass die Druckfarben weitere Sicherheitsmerkmale enthalten, wie z.B. spezielle Sicherheitspigmente, die auch Interferenzpigmente sein können. Insbesondere können auch die weiter oben beschriebenen Interferenzpigmente enthalten in der Präparation in den Druckfarben enthalten sein. Die Druckfarben können auch lösemittelhaltig und/oder mineralölhaltig sein.

Nach der Aufbringung des latenten oder sichtbaren Bildes oder Musters auf das Substrat kann das Substrat vollflächig in Schritt c) unter Zuhilfenahme einer Farbstofflösung und/oder Druckfarbe gefärbt werden. Diese Färbung wird so durchgeführt, dass der gesamte Bereich, entweder innerhalb oder außerhalb der Papiermaschine, bedeckt ist, durch die Aufbringung von Farbstofflösung(en) und/oder Druckfarbe/Druckfarben, welche vorzugsweise lösemittelhaltig und/oder mineralölhaltig sind auf das Substrat mittels klassischer Papierbeschichtungsaggregate und Verfahren, wie z.B. einer Leimpresse, Filmpresse, Rakelstreichmaschine, Badestreichmaschine, Rollen oder Aufsprühen oder durch die Aufbringung einer Farbstofflösung und/oder Druckfarbe auf die gesamte Oberfläche des Substrats unter Zuhilfenahme von geeigneten Druckmethoden, wie z.B. dem Ink-Jet-Druck, Offset-Druck, Flexodruck, Tiefdruck oder durch Aufdrucken unter Zuhilfenahme von Filz- oder Kunststoffwalzen, durch Aufsprühen oder durch Tauchfärben des Papiers in einem Farbstoffbad gefärbt wird. Vorzugsweise wird die Farbe in einem Tauchverfahren aus einer wässrigen Farbstofflösung aufgebracht.

Jede kommerziell erhältliche Farbstofflösung kann für die Zwecke der vorliegenden Erfindung verwendet werden. Die Farbstofflösung enthält normalerweise Farbstoffe in einem Konzentrationsbereich von 0,1 bis 50 Gewichtsprozent, vorzugsweise bis 35 Gewichtsprozent, insbesondere bevorzugt 0,1 bis 30 Gewichtsprozent. Die Konzentration der Farbstofflösung kann entsprechend dem individuell gewünschten zu erzielenden Effekt eingestellt werden (Intensität des nachfolgend gewünschten Bildes). Vergleichsbeispiele können von jedem Fachmann durch einfaches testen durchgeführt werden.

Im Tauchprozess wird das Substrat in eine wässrige Farbstofflösung nach Aufbringung des latenten Bildes oder sichtbaren Bildes oder Musters eingetaucht und nachfolgend abgepresst und getrocknet. Eine Tauchfärbung kann unter Verwendung von geleimten oder ungeleimten Substratbahnen oder Substratblättern durchgeführt werden. Mittels einer Tauchfärbung ist es möglich, sehr gehaltvolle Farben von sehr hoher Leuchtkraft zu erzielen. Ein weiterer Vorteil dieser Methode ist, dass auch geringe Mengen ohne ein uneffektives Verfahren gefärbt werden können.

Falls das latente Bild vor der Färbung des Substrats aufgebracht wurde, absorbiert das Substrat die Farbe während des Färbungsverfahrens zu einem größeren oder geringeren Anteil als in den nichtbehandelten Bereichen, wobei dies von der Substanz, mit der das Substrat vorbehandelt wurde, abhängt.

Eine größere Aufnahme von Tinten in Bereichen, die mit einem Entleimungsmitteln vorbehandelt wurden, führt zu einem Substrat, bei dem das Bild oder Muster, welches in latenter Form aufgebracht wurde, verglichen mit dem restlichen Substrat, welches gefärbt wurde, in einer höheren Farbsättigung derselben Farbe erscheint. Deshalb erscheint die Farbintensität des Bildes oder Musters nachfolgend als "positiv" und kann durch den aufgebrachten Anteil und/oder Zusammensetzung des Entleimungsbades variiert werden.

Falls ein Hydrophobierungsmittel vor der Färbung des Papiers aufgebracht wurde, erscheint das initial in latenter Form aufgebrachte Bild oder Muster nach Färbung des Substrats verglichen mit derselben Farbe in dem gesamten Papier mit einer weniger intensiven Färbung. Auch hier kann die Farbintensität des Bildes oder Musters,nachfolgend als "negativ" durch die Variation der aufgebrachten Menge und/oder Zusammensetzung des aufgebrachten Hydrophobierungsmittels variiert werden.

Für die Bildung des latenten Bildes ist es auch möglich, ein Entleimungsmittel und hydrophobierende Substanzen nebeneinander auf derselben Substratoberfläche aufzubringen, so dass das fertige Substrat sowohl "positive" als auch "negative" Bilder oder Muster aufweist.

Um die oben beschriebenen Effekte zu erhalten, ist es notwendig, dass die Färbung des Substrats nach der Aufbringung von Substanzen, die die Tintenabsorption beeinflussen, erfolgt.

Wenn ein sichtbares Bild oder Muster vor der Färbung des Substrats aufgebracht wird, so intensiviert die nachfolgende Färbung des Substrats das vorher aufgebrachte Bild oder Muster, so dass auch ein Spezialeffekt, nämlich eine nichteinheitlich intensive Färbung auf dem Substrat, erzielt werden kann. Dieser Effekt wird nur erzielt, wenn das Substrat, welches das sichtbare Bild trägt, zusätzlich gefärbt wird.

Gebräuchliche wässrige Farbstofflösungen können zur Färbung des Substrats verwendet werden. Diese können basische und/oder saure und/oder substantive Farbstoffe enthalten. Beispiele von geeigneten Farbstofflösung sind Lösungen, die Anthrachinon-, Monoazo-, Diazo-, Phthalocyanin-, Aza-(18)-annulen- und Formazan-Kupfer-Komplexfarbstoffe enthalten. Spezielle Beispiele von geeigneten Farbstoffen sind in EP-A 559 324, auf Seit 4, Zeilen 25 bis 53 erwähnt. Insbesondere sind dies Triphenodioxazine, Bernacid Red 2BMN; Pontamine Brilliant Bond Blue A; Pontamin; Food Black 2; Carodirect Turquoise FBL Supra Conc. (Direct Blue 199), erhältlich von Carolina Color and Chemical; Special Fast Turquoise 8GL Liquid (Direct Blue 86), erhältlich von Mobay Chemical; Intrabond Liquid Turquoise GLL (Direct Blue 86), erhältlich von Crompton and Knowles; Cibracron Brilliant Red 38-A (Reactive Red 4), erhältlich von Aldrich Chemical; Drimarene Brilliant Red X-2B (Reactive Red 56), erhältlich von Pylam, Inc.; Levafix Brilliant Red E-4B, erhältlich von Mobay Chemical; Levafix Brilliant Red E-6BA, erhältlich von Mobay Chemical; Procion Red H8B (Reactive Red 31), erhältlich von ICI America; Pylam Certified D&C Red #28 (Acid Red 92), erhältlich von Pylam; Direct Brill Pink B Ground Crude, erhältlich von Crompton & Knowles; Cartasol Gelb GTF, erhältlich von Sandoz, Inc.; Tartrazine Extra Conc. (FD&C Gelb #5, Acid Yellow 23), erhältlich von Sundoz; Carodirect Yellow RL, (Direct Yellow 86), erhältlich von Carolina Color and Chemical; Cartasol Yellow GTF Liquid Special 110, erhältlich von Sundoz, Inc.; D&C Yellow #10 (Acid Yellow 3), erhältlich von Tricon; Yellow Shade 16948, erhältlich von Tricon, Basacid Black X34, erhältlich von BASF, Carta Black 2GT, erhältlich von Sundoz, Inc.; Direct Brilliant Pink B (Crompton-Knolls); Kayanol Red 3BL (Nippon Kayaku Company); Levanol Brilliant Red 3BW (Mobay Chemical Company); Levaderm Lemon Yellow (Mobay Chemical Company); Spirit Fast Yellow 3G; Sirius Supra Yellow GD 167; Cartasol Brilliant Yellow 4GF (Sundoz); Pergasol Yellow CGP (Ciba-Geigy); Dermacarbon 2GT (Sundoz); Pyrazol Black BG (ICI); Morfast Black Conc A (Morton-Thiokol); Diazol Black RN Quad (ICI); Luxol Blue MBSN (Morton-Thiokol); Sevron Blue 5GMF (ICI); Basacid Blue 750 (BASF); Bernacid Red, erhältlich von Berncolors, Poughkeepsie, NY; Pontamine Brilliant Bond Blue; Berncolor A.Y. 34; Telon Fast Yellow 4GL-175; BASF Basacid Black SE 0228; die Pro-Jet Serien erhältlich von ICI, einschließlich Pro-Jet Gelb I (Direct Yellow 86), Pro-Jet Magenta I (Acid Red 249), Pro-Jet Cyan I (Direct Blue 199), Pro-Jet Schwarz I (Direct Black 168), Pro-Jet Yellow 1-G (Direct Yellow 132), Aminyl Brilliant Red F-B, erhältlich von Sumitomo Chemical Co. (Japan), die Duasyn Linievon "salzfreien" Farbstoffe, erhältlich von Hoechst, wie etwa Duasyn Direct Schwarz HEF-SF (Direct Black 168), Duasyn Schwarz RL-SF (Reactive Black 31), Duasyn Direct Gelb 6G-SF VP216 (Direct Yellow 157), Duasyn Brilliant Gelb GL-SF VP220 (Reactive Yellow 37), Duasyn Acid Yellow XX-SF VP413 (Acid Yellow 23), Duasyn Brilliant Rot F3B-SF VP218 (Reactive Red 180), Duasyn Rhodamine B-SF VP353 (Acid Red 52), Duasyn Direct Türkisblau FRL-SF VP368 (Direct Blue 199), Duasyn Acid Blue AE-SF VP344 (Acid Blue 9), und ähnliche und Mischung dieser Farbstoffe.

Weitere Farbstoffe, die verwendet werden können enthalten oder basieren auf Pigmenten (färbende oder nichtfärbende Pigmente).

Die Konzentration der Farbstoffe hängt von dem Hersteller und auch von der verwendeten Farbe ab und ist nicht einschränkend für die vorliegende Erfindung.

Die Farbstofflösungen können auch weitere Additive, wie z.B. Alkohol, Verdickungsmittel, Nassfestmittel, optische Aufheller, Konservierungsstoffe, Sicherheitschemikalien, Bindemittel und Pigmente (färbende oder nichtfärbende Pigmente, wie z.B. Calciumcarbonat) enthalten. Hilfsstoffe für die Farbstofflösung sind insbesondere Gummi Arabicum, Polyacrylatsalze, Polymethacrylatsalze, Polyvinylalkohole, Hydroxypropylzellulose, Hydroxyethylzellulose, Polyvinylpyrrolidone, Polyvinylether, Stärke, Polysacharide und dergleichen. Weitere gebräuchliche Additive für Tinten können auch enthalten sein. Solche gebräuchlichen Additive werden in der EP-A-518 490, Seite 4, Zeile 55 bis Seite 5, Zeile 9 offenbart.

Ein weiterer Gegenstand der vorliegenden Erfindung ist ein Substrat, erhältlich nach dem vorgenannten Verfahren.

Überraschenderweise lässt sich die Menge an Interferenzpigment, die notwendig ist, um einen Effekt zu erzielen, im Vergleich zur Aufbringung von Interferenzpigmenten mittels Druckfarben, um den Faktor 10 verringern. Insbesondere zeigt sich, dass, falls Interferenzpigmente in einer geringen Konzentration aufgebracht werden, diese zunächst mit dem unbewehrten Auge auf dem Substrat nicht sichtbar sind, jedoch nach Entwicklung mit einer Farbstofflösung oder Druckfarbe sichtbar werden. Somit ist es vorteilhafterweise möglich, Substrate mit Sicherheitsmerkmalen bereitzustellen, die zunächst einem Betrachter so erscheinen, als sei kein Sicherheitsmerkmal aufgebracht, jedoch durch einfache Weise, nämlich durch Aufbringung von Farbstofflösungen und/oder Druckfarben, das Sicherheitsmerkmal zeigen. Überraschenderweise ist es somit möglich, Substrate mit Sicherheitsmerkmalen zur Verfügung zu stellen, bei denen ein unbedarfter Betrachter das Sicherheitsmerkmal auf Anhieb nicht findet und somit der Ansicht ist, dass das Substrat kein Sicherheitsmerkmal aufweist. Durch die einfache Entwicklung mit einer Farbstofflösung und/oder Druckfarbe ist es jedoch sehr einfach möglich, zu überprüfen, ob ein Substrat mit einem Sicherheitsmerkmal vorliegt oder nicht. Fälschungen können so auf sehr einfache Weise erkannt werden.

Falls das Substrat in dem optionalen Schritt c) gefärbt und/oder bedruckt wurde sind die Interferenzpigmente nachfolgend sehr gut sichtbar. Der Kontrast zwischen Bereichen, die Interferenzpigmente aufweisen und solchen, die nicht behandelt wurden ist sehr groß. Dies ist sehr überraschend, da die aufgebrachte Menge an Interferenzpigment sehr viel kleiner ist, verglichen mit einer Druckfarbe, die solche Pigmente enthält. Trotz der geringeren Auftragsmenge ist bei einem erfindungsgemäßen Substrat nach Färbung oder Bedruckung das Interferenzpigment genauso sichtbar, als wenn dieses mittels einer Druckfarbe aufgebracht worden wäre. Durch den speziellen Aufbau des erfindungsgemäßen Substrats ist es allerdings für einen Fälscher unmöglich ein solches Substrat zu fälschen.

Es ist aber auch möglich, dass das aufgebrachte Interferenzpigment nur an bestimmten Bereichen des Substrats gefärbt und/oder bedruckt wurde, so dass auch Bereiche vorliegen, bei denen das Interferenzpigment mit unbewehrtem Auge nicht sichtbar ist. Bei der Kontrolle eines solchen Substrats auf Fälschungen müssen somit nur die noch nicht gefärbten Bereiche gefärbt und/oder bedruckt werden, um das Interferenzpigment sichtbar zu machen. Eine solche Kontrolle kann zum Beispiel mit einem Filzstift erfolgen und ist somit sehr einfach durchzuführen.

Der Gegenstand der vorliegenden Erfindung wird nachfolgend detailliert an Beispielen erläutert.

### Beispiele

Ein Papier mit einem Flächengewicht von 105 g/m² wird auf einer Langsieb-Papiermaschine hergestellt. Die Pulpe-Zusammensetzung enthält 80 Gewichtsprozent von Langfasersulfatzellstoff und 20 Gewichtsprozent von Eukalyptussulfatzellstoff. Die Leimung des Papiers wird unter Verwendung von Harzleim und Alaun durchgeführt. 1 Prozent eines Harnstoffformaldehydharzes wird als Nassfestmittel verwendet. Das Papier gemäß den Beispielen hat keine Oberflächenleimung.

### Beispiel 1

Eine wässrige Lösung, enthaltend 80,4 g Wasser, 5,0 g des Interferenzpigments "colorstream T10-01 Fantasy", erhältlich von der Firma Merck, 4,40 g modifizierte Stärke, 1,0 g eines Hydrophobierungsmittels sowie 4,0 g eines Entschäumers wird hergestellt. Als Tensid wird ein polyethermodifiziertes Trisiloxan (nichtionisches Tensid) der Firma Goldschmidt mit dem Handelsnamen TEGOPREN 5847 verwendet. Von dem Tensid TEGOPREN 5847 werden 0,2 g (Handelsware) eingebracht. Außerdem enthält die wässrige Präparation als Verdicker 7,0 g eines Schichtsilicats, welches unter dem Handelsnamen "Laponite RDS" vertrieben wird.

### Beispiel 2

Eine wässrige Lösung, enthaltend 79,30 g Wasser, 1,50 g des Interferenzpigments "Iriodin 123", erhältlich von der Firma Merck, 4,0 g modifizierte Stärke, 3,00 g eines partikulären Siliziumdioxids, 1,50 g eines Hydrophobierungsmittels sowie 3,50 g eines Entschäumers wird hergestellt. Als Tensid wird ein polyethermodifiziertes Trisiloxan (nichtionisches Tensid) der Firma Goldschmidt mit dem Handelsnamen TEGOPREN 5847 verwendet. Von dem Tensid TEGOPREN 5847 werden 0,2 g (Handelsware) eingebracht. Außerdem enthält die wässrige Präparation als Verdicker 7,0 g eines Schichtsilicats, welches unter dem Handelsnamen "Laponite RDS" vertrieben wird.

Die wässrigen Präparationen gemäß Beispiel 1 und 2 werden unter Zuhilfenahme eines Auftragsaggregates, wie zum Beispiel einem Fineliner (Rotring Rapidograph, 0,35 mm Durchmesser), einer Zugfeder oder einer Bürste sowie mittels eines Flexodruckwerks auf dem vorgenannten Papier aufgebracht.

Nach Trocknung des Papiers erhält man ein mit einer Präparation versehene Papiere, welche die aufgebrachten Muster und Buchstaben nicht sichtbar erscheinen lassen.

Werden die so präparierten Papiere nachfolgend in eine Farbstofflösung, wie zum Beispiel eine 1,0 Gew.-% starke wässrige Cartasol Blau 3 RF Lösung (Sandoz Chemikalien AG, Basel/Clariant Deutschland GmbH, Lörrach) getaucht, so werden die aufgebrachten Buchstaben sehr klar sichtbar und erscheinen positiv. Hierbei wird der Effekt der Interferenzpigmente sehr deutlich sichtbar und das, obwohl im Vergleich zu einem mit Interferenzpigmenten bedruckten Papier nur eine sehr geringe Menge an Interferenzpigment aufgebracht wurde.

## Patentansprüche

1. Ein Verfahren zur Aufbringung von Interferenzpigmenten auf ein Substrat umfassend die Schritte:
a) Bereitstellung eines Substrats und
b) Aufbringung einer Präparation auf wenigstens einer Seite des Substrats, die Präparation enthält mindestens ein Tensid und mindestens ein Interferenzpigment, wobei das Interferenzpigment ein Trägermaterial und mindestens eine auf dem Trägermaterial aufgebrachte Beschichtung aufweist.

2. Das Verfahren gemäß Anspruch 1, **dadurch gekennzeichnet, dass** das Substrat in Schritt a) ein Papier und/oder Karton ist.

3. Das Verfahren gemäß Anspruch 1 oder 2, **dadurch gekennzeichnet, dass** die Präparation in Schritt b) in Form eines latenten Bildes oder Musters aufgebracht wird.

4. Das Verfahren nach mindestens einem der vorgenannten Ansprüche, **dadurch gekennzeichnet, dass** die Aufbringung der Präparation durch Inkjetdruck, Offsetdruck, Flexodruck, Tiefdruck oder Aufdruckung unter Zuhilfenahme von Filz oder Gummirollen, durch Aufsprayen oder manuell erfolgt.

5. Das Verfahren nach mindestens einem der vorgenannten Ansprüche, **dadurch gekennzeichnet, dass** das Trägermaterial des Interferenzpigments eine plättchenförmige Struktur aufweist und/oder ein anorganisches Trägermaterial ist.

6. Das Verfahren nach mindestens einem der vorgenannten Ansprüche, **dadurch gekennzeichnet, dass** das Trägermaterial des Interferenzpigments in Schritt b) natürlichen oder synthetischen Glimmer, Talkum, Kaolin, Glasplättchen, SiO₂-Plättchen, TiO₂-Plättchen Al₂O₃-Plättchen, Fe₂O₃-Plättchen, Graphitplättchen oder Mischungen derselben enthält.

7. Das Verfahren nach mindestens einem der vorgenannten Ansprüche, **dadurch gekennzeichnet, dass** auf dem Trägermaterial des Interferenzpigments in Schritt b) zwei, drei, vier oder fünf Beschichtungen aufgebracht sind, die vorzugsweise jeweils gleich oder unterschiedlich sein können.

8. Das Verfahren nach mindestens einem der vorgenannten Ansprüche, **dadurch gekennzeichnet, dass** die Beschichtung/Beschichtungen des Interferenzpigments in Schritt b) unabhängig voneinander Oxide von Metallen oder Semimetallen/Halbmetallen oder Mischungen derselben, wie z.B. Si, Sn, Ti, Fe enthält/enthalten.

9. Das Verfahren nach mindestens einem der vorgenannten Ansprüche, **dadurch gekennzeichnet, dass** die Beschichtung/die Beschichtungen des Interferenzpigments in Schritt b) Oxide ausgewählt aus TiO₂, Titansuboxid, Titanoxinitrid, Fe₂O₃, Fe₃O₄, SnO₂, Sb₂O₃, SiO₂, Al₂O₃, ZrO₂, B₂O₃, Cr₂O₃, ZnO, CuO, NiO oder Mischungen derselben enthält/enthalten.

10. Das Verfahren nach mindestens einem der vorgenannten Ansprüche, **dadurch gekennzeichnet, dass** das Interferenzpigment in Schritt b) eine mittlere Teilchengrösse von 1 µm bis 500 µm aufweist.

11. Das Verfahren nach mindestens einem der vorgenannten Ansprüche, **dadurch gekennzeichnet, dass** das Tensid in Schritt b) die Penetration von wasserlöslichen Farbstoffen in das Substrat verringert.

12. Das Verfahren nach mindestens einem der vorgenannten Ansprüche, **dadurch gekennzeichnet, dass** das Tensid in Schritt b) die Penetration von wasserlöslichen Farbstoffen in das Substrat erleichtert.

13. Das Verfahren nach mindestens einem der vorgenannten Ansprüche, **dadurch gekennzeichnet, dass** in Schritt b) sowohl ein Tensid, welches die Penetration von wasserlöslichen Farbstoffen in das Papier erleichtert und ein Tensid, welches die Penetration von wasserlöslichen Farbstoffen in das Papier verringert, aufgebracht werden.

14. Das Verfahren nach mindestens einem der vorgenannten Ansprüche, **dadurch gekennzeichnet, dass** die Aufbringung in Schritt b) auf einer kontinuierlichen Papierbahn erfolgt.

15. Das Verfahren nach mindestens einem der vorgenannten Ansprüche, **dadurch gekennzeichnet, dass** in der Präparation in Schritt b) wenigstens ein weiteres Pigment enthalten ist.

16. Das Verfahren nach Anspruch 15, **dadurch gekennzeichnet, dass** das weitere Pigment in Schritt b) ausgewählt ist aus Oxiden von Metallen oder Semimetallen/Halbmetallen wie zum Beispiel Magnesium, Calcium, Aluminium, Zink, Chrom, Eisen, Kupfer, Zinn, Blei oder Mangan oder Diatomit oder organischen Materialen oder Kombinationen hiervon.

17. Das Verfahren nach Anspruch 15 oder 16, **dadurch gekennzeichnet, dass** das weitere Pigment ausgewählt ist aus Kieselsäure, Gibbsit, Bayerit, Nordostrandit, Böhmit, Pseudoböhmit, Diaspor, Aluminiumoxid, insbesondere Korund, Aluminiumoxidhydrat, Magnesiumsilikat, basisches Magnesiumcarbonat, Titan(di)oxid, Zinkoxid, Aluminiumsilikat, Calciumcarbonat, Talkum, Kaolin, Hydrotalcit, Diatomit, organischen Materialen wie z. B. harzhaltige Pigmente hergestellt aus Harnstoff-Formaldehyd-Harzen, Ethylenharze, Styrolharze, Acrylatharze oder Kombinationen hiervon.

18. Das Verfahren nach mindestens einem der vorgenannten Ansprüche, **dadurch gekennzeichnet, dass** nach Aufbringung der Präparation in Schritt b) das Substrat in einem weiteren Schritt c) gefärbt und/oder bedruckt wird.

19. Das Verfahren gemäß Anspruch 18, **dadurch gekennzeichnet, dass** für das Färben/Bedrucken in Schritt c) eine wässrige Farbstofflösung verwendet wird.

20. Das Verfahren gemäß Anspruch 18 oder 19, **dadurch gekennzeichnet, dass** die Färbung/Bedruckung in Schritt c) innerhalb oder außerhalb einer Papiermaschine durch Aufbringung von einer Farbstofflösung/Farbstofflösungen und/oder Druckfarbe/Druckfarben, welche vorzugsweise lösemittelhaltig und/oder mineralölhaltig sind auf das Substrat mittels eines klassischen Papierstreichapparats und/oder durch Verfahren, wie zum Beispiel einer Leimpresse, einer Filmpresse, einem Messerstreichaggregat, Klingen, Rollen oder Aufsprühen oder durch Aufbringen einer Farbstofflösung und/oder Druckfarbe auf die gesamte Oberfläche des Papier unter Zuhilfenahme von geeigneten Druckmethoden, wie zum Beispiel Inkjetdruck, Offsetdruck, Flexodruck, Tiefdruck oder Bedruckung mittels Filz oder Gummirollen oder durch Aufsprayen oder durch Tauchfärbung erfolgt.

21. Das Verfahren gemäß mindestens einem der Ansprüche 3 bis 20, **dadurch gekennzeichnet, dass** das Bild oder Muster ein Diagramm, ein Symbol, ein gleichmäßiges oder ungleichmäßiges Muster, eine Netzstruktur oder irgendeine gewünschte nichteinheitliche Farbverteilung aufweist.

22. Ein Substrat, erhältlich durch das Verfahren gemäß mindestens einem der Ansprüche 1 bis 21.
